# EUROPEAN PATENT APPLICATION

(11) **EP 4 644 277 A1**
(43) Date of publication of application: **05.11.2025**
(21) Application number: 23910457.3
(22) Date of filing: 25.12.2023
(51) Int. Cl.: B65B 11/12, H01M 6/00, H01M 10/04, B65B 33/02

(54) **BATTERY CELL PROTECTIVE FILM COATING APPARATUS AND BATTERY CELL PROTECTIVE FILM COATING SYSTEM**

(30) Priority: 30.12.2022 CN 202223609833 U
(71) Applicant: BYD Company Limited, Shenzhen, Guangdong 518118 (CN)
(72) Inventor: WU, Kui, Shenzhen, Guangdong 518118 (CN); WANG, Ziwei, Shenzhen, Guangdong 518118 (CN); ZHU, Yanrong, Shenzhen, Guangdong 518118 (CN); LIU, Jun, Shenzhen, Guangdong 518118 (CN); ZHANG, Yong, Shenzhen, Guangdong 518118 (CN)
(74) Representative: Mathys & Squire
(86) International application number: PCT/CN2023/141442
(87) International publication number: WO 2024/140531

(57) **Abstract**

A battery cell protective film coating system, comprising battery cell protective film coating apparatuses. Each battery cell protective film coating apparatus comprises a first base, a film suction mechanism, a turning mechanism, a roller mechanism and a film folding and pressing mechanism. The film suction mechanism is arranged on the first base; the turning mechanism is arranged on the first base and drives a part of the film suction mechanism to rotate relative to the other part of the film suction mechanism; the roller mechanism is arranged on the first base and can move up and down relative to the first base; the roller mechanism is used for coating the side face of a cell in a first direction with a protective film; the film folding and pressing mechanism comprises folding blade assemblies; each folding blade assembly comprises a folding blade and a first drive component, the first drive component driving the folding blade to move, and the folding blade being used for coating the side face of the cell in a second direction with the protective film.

## Description

### CROSS-REFERENCE TO RELATED APPLICATIONS

The present disclosure claims priority to Chinese Patent Application No. 202223609833.7, filed on December 30, 2022 and entitled "BATTERY CORE PROTECTIVE FILM WRAPPING DEVICE AND BATTERY CORE PROTECTIVE FILM WRAPPING SYSTEM". The entire content of the above-referenced application is incorporated herein by reference.

### FIELD

The present disclosure relates to the technical field of battery cores, and more specifically, a battery core protective film wrapping device and a battery core protective film wrapping system.

### BACKGROUND

Key devices in the production of lithium batteries are important guarantees for product capacity and quality. A battery film wrapping device is one of the key devices in many production links. In the production process of wrapping a bare battery core with a protective film, a small offset between the position of the film and the position of the battery core as well as the tight wrapping of the battery core need to be ensured.

In the related art, a battery core wrapping device usually places a battery core on a positioning fixture; the flipping mechanisms on two sides cannot effectively attach the protective film to two sides of the battery core, or a relatively large gap exists between the protective film and the battery core. The protective film is prone to wrinkles, resulting in low wrapping accuracy and affecting the assembly quality of subsequent workstations. In addition, a film wrapping apparatus has a relatively complex structure, occupies a relatively large space, and has relatively low device integration. Moreover, a film wrapping station is a single workstation, resulting in low production efficiency.

### SUMMARY

The present disclosure is intended to resolve at least one of the technical problems existing in the related art. The present disclosure provides a battery core protective film wrapping device. A film suction mechanism adsorbs a protective film. A flipping mechanism drives a part of the film suction mechanism to flip. Then, a roller mechanism wraps two side surfaces of the battery core with the protective film in a first direction. Finally, a film folding and pressing mechanism wraps the side surfaces of the battery core with the protective film in a second direction. In this way, high-precision positioning and film wrapping can be realized, the quality of the wrapped film and product to be subsequently loaded into a casing is ensured, and an automatic film wrapping efficiency for a product is improved.

The present disclosure further provides a battery core protective film wrapping system.

The battery core protective film wrapping device in a first aspect of an embodiment of the present disclosure includes a first base, a film suction mechanism, a flipping mechanism, a roller mechanism, and a film folding and pressing mechanism. The film suction mechanism is arranged on the first base. The flipping mechanism is arranged on the first base. The flipping mechanism drives one part of the film suction mechanism to rotate relative to another part of the film suction mechanism. The roller mechanism is arranged on the first base and is movable up and down relative to the first base. The roller mechanism is configured to wrap a protective film around a side surface of a battery core in a first direction. The film folding and pressing mechanism further includes a folding knife assembly. The folding knife assembly includes a folding knife and a first driving member. The first driving member drives the folding knife to move. The folding knife is configured to wrap the protective film around a side surface of the battery core in a second direction.

According to the battery core protective film wrapping device in this embodiment of the present disclosure, the film suction mechanism adsorbs the protective film. The flipping mechanism drives a part of the film suction mechanism to flip. Then, the roller mechanism wraps the side surfaces of the battery core with the protective film in the first direction. Finally, the film folding and pressing mechanism wraps the side surfaces of the battery core with the protective film in the second direction. In this way, high-precision positioning and film wrapping can be realized, the quality of the wrapped film and product to be subsequently loaded into a casing is ensured, and the automatic film wrapping efficiency for a product is improved.

According to some embodiments of the present disclosure, two folding knife assemblies are arranged. The two folding knife assemblies are arranged opposite to each other.

According to some embodiments of the present disclosure, the film folding and pressing mechanism further includes a first lifting assembly. The first lifting assembly is in driving connection with the folding knife assembly. The first lifting assembly is configured to drive the folding knife assembly to move in the second direction.

According to some embodiments of the present disclosure, the film folding and pressing mechanism further includes two pressing assemblies. The pressing assemblies are arranged below the folding knife assembly. The two pressing assemblies are oppositely arranged in the first direction. Each of the pressing assemblies is configured to tightly press the protective film on the side surface of the battery core in the first direction.

According to some embodiments of the present disclosure, the pressing assembly includes a second driving member and a pressing plate. The second driving member is in driving connection with the pressing plate. The second driving member is configured to drive the pressing plate to move in the first direction.

According to some embodiments of the present disclosure, the film suction mechanism includes two first film suction plates and two second film suction plates. The two first film suction plates are arranged between the two second film suction plates. The flipping mechanism is in driving connection with the first film suction plate to drive the protective film to be folded.

According to some embodiments of the present disclosure, the flipping mechanism includes two driving assemblies. The two driving assemblies are arranged opposite to each other. One of the driving assemblies is in driving connection with one of the first film suction plates. The other of the driving assemblies is in driving connection with the other of the first film suction plates.

According to some embodiments of the present disclosure, the driving assembly includes a third driving member, a first transmission member, and a second transmission member. The third driving member is in driving connection with the first transmission member. The first transmission member is in driving connection with the second transmission member. The second transmission member is in driving connection with the first film suction plate and configured to drive the first film suction plate to rotate.

According to some embodiments of the present disclosure, the battery core protective film wrapping device further includes two positioning mechanisms. Each of the positioning mechanism is arranged on a side of the driving assembly facing the film folding and pressing mechanism. The positioning mechanism includes a fourth driving member and a positioning block. The positioning block is configured to position the battery core.

According to some embodiments of the present disclosure, the roller mechanism includes two rollers and a fifth driving member. The two rollers are respectively arranged on outer sides of the two first film suction plates. The fifth driving member drives the two rollers to move up and down.

A battery core protective film wrapping system according to an embodiment of a second aspect of the present disclosure includes a rotary table device and the battery core protective film wrapping device. The rotary table device is provided with multiple mounting grooves. Multiple battery core protective film wrapping devices are respectively arranged in the multiple mounting grooves.

According to some embodiments of the present disclosure, the battery core protective film wrapping system further includes a loading manipulator, a hot melting mechanism, and an unloading manipulator. The loading manipulator is arranged at one angle of the rotary table device. The hot melting mechanism is arranged at another angle of the rotary table device. The unloading manipulator is arranged at yet another angle of the rotary table device, and the unloading manipulator is arranged opposite to the loading manipulator.

Parts of additional aspects and advantages of the present disclosure are provided in the following description. The parts become apparent from the following description, or are learned through practice of the present disclosure.

### BRIEF DESCRIPTION OF THE DRAWINGS

The foregoing and/or additional aspects and advantages of the present disclosure become apparent and comprehensible from description of embodiments made with reference to the following drawings.
FIG. 1 is a schematic structural diagram of a battery core protective film wrapping device according to an embodiment of the present disclosure;
FIG. 2 is a partial schematic diagram of a battery core protective film wrapping device according to an embodiment of the present disclosure;
FIG. 3 is a schematic diagram of operation of a battery core protective film wrapping device according to an embodiment of the present disclosure;
FIG. 4 is a side view of a battery core protective film wrapping device according to an embodiment of the present disclosure;
FIG. 5 is a partial side view of a battery core protective film wrapping device according to an embodiment of the present disclosure;
FIG. 6 is a schematic structural diagram of a folding knife and a pressing plate according to an embodiment of the present disclosure;
FIG. 7 is a partial schematic diagram of a film folding and pressing mechanism according to an embodiment of the present disclosure;
FIG. 8 is a schematic diagram of a rotary table device according to an embodiment of the present disclosure; and
FIG. 9 is an exemplary schematic diagram of a battery core protective film wrapping system according to an embodiment of the present disclosure.

In the drawings:
100. Battery core protective film wrapping device; 10. First base; 20. film suction mechanism; 21. First film suction plate; 22. Second film suction plate;
30. Flipping mechanism; 31. Driving assembly; 311. Third driving member; 312. First transmission member; 313. Second transmission member;
40. Roller mechanism; 41. Roller; 42. Fifth driving member; 50. film folding and pressing mechanism; 51. Folding knife assembly; 511. Folding knife; 512. First driving member; 52. First lifting assembly; 53. Pressing assembly; 531. Second driving member; 532. Pressing plate; 60. Positioning mechanism; 61. Fourth driving member; 62. Positioning block; 70. Battery core; 200. Rotary table device; 210. Mounting groove; 220. Rotary shaft; 101. Loading manipulator; 102. Hot melting mechanism; 103. Unloading manipulator; 1000. Battery core protective film wrapping system.

### DETAILED DESCRIPTION

Embodiments described with reference to the drawings are exemplary, and the embodiments of the present disclosure are described in detail below.

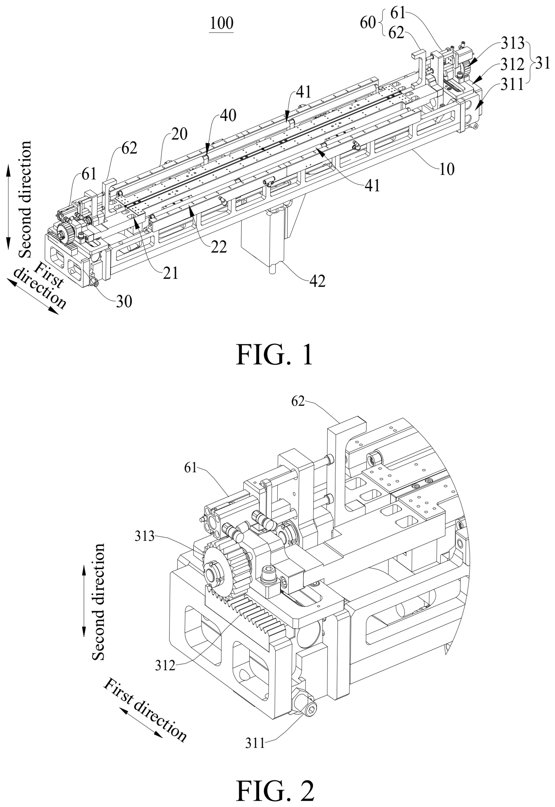

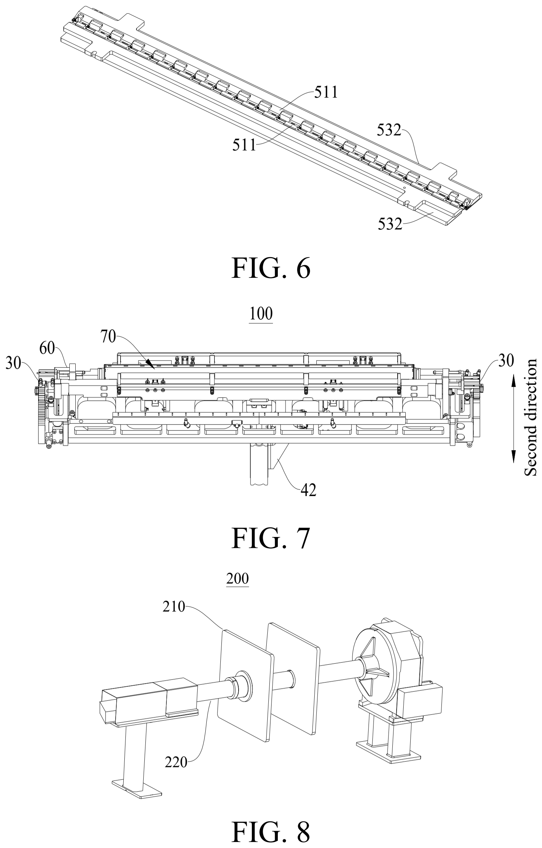

A battery core protective film wrapping device 100 in the embodiments of the present disclosure is described below with reference to FIG. 1 to FIG. 8. The present disclosure further provides a battery core protective film wrapping system having the foregoing battery core protective film wrapping device 100.

With reference to FIG. 1 to FIG. 5, the battery core protective film wrapping device 100 in the embodiments of the present disclosure includes a first base 10, a film suction mechanism 20, a flipping mechanism 30, a roller mechanism 40, and a film folding and pressing mechanism 50. The film suction mechanism 20 is arranged on the first base 10. The flipping mechanism 30 is arranged on the first base 10. The flipping mechanism 30 drives one part of the film suction mechanism 20 to rotate relative to another part of the film suction mechanism 20. The roller mechanism 40 is arranged on the first base 10 and may move up and down relative to the first base 10. The roller mechanism 40 is configured to wrap a protective film around a side surface of a battery core 70 in a first direction. Specifically, the battery core 70 has a flat cuboid structure. Before wrapping of the protective film, a spacer needs to be sleeved on positive and negative electrodes of the battery core 70. Two ends of the battery core 70 equipped with the spacer do not need to be wrapped with the protective film. Therefore, the protective film needs to be wrapped around the other four side surfaces of the battery core 70. The film suction mechanism 20, the flipping mechanism 30, and the roller mechanism 40 are all arranged on the first base 10. The film suction mechanism 20 is located on an upper side of the first base 10. The film suction mechanism 20 may adsorb the protective film, and attach the protective film to a side surface of the battery core 70, thereby protecting the battery core 70 from corrosion. In addition, the flipping mechanism 30 may drive one part of the film suction mechanism 20 to rotate relative to the other part of the film suction mechanism 20. Therefore, the protective film adsorbed by the film suction mechanism 20 is flipped, thereby attaching the protective film to the battery core 70.

As shown in FIG. 1 to FIG. 7, in an up-down direction of the first base, that is, in a second direction, the roller mechanism 40 may move relative to the first base 10. After the flipping mechanism 30 drives the film suction mechanism 20 to flip, the roller mechanism 40 moves upward relative to the first base 10. A part of the protective film is sandwiched between the roller mechanism 40 and the battery core 70. During the upward movement of the roller mechanism 40 relative to the first base 10, the roller mechanism 40 causes the part of the protective film to wrap two side surfaces of the battery core 70 in the first direction. The first direction is a left-right direction of the first base. In this way, the two side surfaces of the battery core 70 are wrapped with the protective film. The roller mechanism 40 may reduce a gap between the protective film and the battery core 70, so that the protective film is flatly attached to the two side surfaces of the battery core 70 in the first direction.

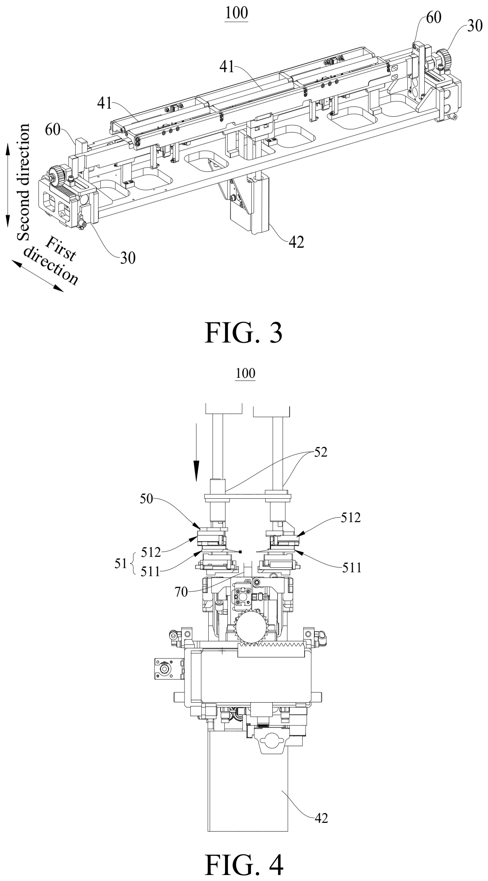

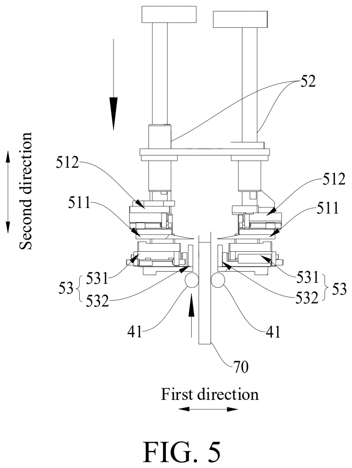

As shown in FIG. 4 and FIG. 5, the film folding and pressing mechanism 50 includes a folding knife assembly 51. The folding knife assembly 51 includes a folding knife 511 and a first driving member 512. The first driving member 512 drives the folding knife 511 to move. The folding knife 511 is configured to wrap a protective film around a side surface of the battery core 70 in the second direction. Specifically, the film folding and pressing mechanism 50 includes a folding knife assembly 51. The folding knife assembly 51 includes a folding knife 511 and a first driving member 512. The first driving member 512 may drive the folding knife 511 to move. After the battery core 70 is wrapped with the protective film through the flipping mechanism 30 and the roller mechanism 40, a part of the protective film protrudes from the battery core 70. The folding knife 511 bends the part of the protective film. The first driving member 512 extends, drives the folding knife 511 to move toward the battery core 70, and bends the protective film by 90° toward the battery core 70, so that the part of the protective film overlaps on the side surface of the battery core 70 in the second direction. The second direction is an up-down direction of the first base 10. In this way, a last side surface of the battery core 70 is wrapped with the protective film.

First, the film suction mechanism 20 adsorbs the protective film. The protective film is placed flat on the film suction mechanism 20. The battery core 70 is vertically placed on the protective film. A side surface of the battery core 70 in the second direction is attached to the protective film. Secondly, the flipping mechanism 30 drives a part of the film suction mechanism 20 to rotate relative to the first base 10, so that the protective film bends. Therefore, the protective film abuts against the two side surfaces of the battery core 70 in the first direction. Next, the roller mechanism 40 moves upward relative to the first base 10, so that a part of the protective film is flatly attached to the battery core 70. The film folding and pressing mechanism 50 presses the protective film. The operation of attaching the protective film to the two side surfaces of the battery core 70 in the first direction is completed. Then, the film folding and pressing mechanism 50 bends the remaining part of the protective film, and a second side surface of the battery core 70 is wrapped with the protective film in the second direction. Finally, the film folding and pressing mechanism 50 is reset. The roller mechanism 40 moves downward relative to the first base 10 and is reset. Through cooperation of the various mechanisms, high-precision positioning and film wrapping can be implemented. After the film wrapping, the gap between the protective film and the battery core 70 is small, the quality of the wrapped film and product to be subsequently loaded into a casing is ensured, and the automatic film wrapping efficiency for a product is improved.

The film suction mechanism 20 adsorbs the protective film. The flipping mechanism 30 drives a part of the film suction mechanism 20 to flip. Then, the roller mechanism 40 wraps the side surfaces of the battery core 70 with the protective film in the first direction. Finally, the film folding and pressing mechanism 50 wraps the side surfaces of the battery core 70 with the protective film in the second direction. In this way, high-precision positioning and film wrapping can be realized, the quality of the wrapped film and product to be subsequently loaded into a casing is ensured, and the automatic film wrapping efficiency for a product is improved.

Further, two folding knife assemblies 51 are provided. The two folding knife assemblies 51 are oppositely arranged. Specifically, in the first direction, the two folding knife assemblies 51 are respectively arranged at two ends of the first base 10. Two sides of the battery core 70 are wrapped with the protective film in the first direction, so that the protective film on the two sides of the battery core 70 in the first direction is overlapped on the side surface of the battery core 70, thereby ensuring the high precision of the film folding operation, ensuring the quality of the wrapped film, and improving the wrapping efficiency.

With reference to FIG. 4 to FIG. 6, the film folding and pressing mechanism 50 further includes a first lifting assembly 52. The first lifting assembly 52 is in driving connection with the folding knife assembly 51. The first lifting assembly 52 drives the folding knife assembly 51 to move in the second direction. Specifically, the film folding and pressing mechanism 50 further includes a first lifting assembly 52. The first lifting assembly 52 is in driving connection with the folding knife assembly 51. The first lifting assembly 52 can control the folding knife assembly 51 to implement displacement in the second direction. After the battery core 70 is wrapped with the protective film through the roller mechanism 40, the first lifting assembly 52 drives the folding knife 511 of the folding knife assembly 51 to move downward in the second direction, that is, in an up-down direction. Therefore, a lower edge of the folding knife 511 and an upper edge of the battery core 70 are at a height, which helps the first driving member 512 to drive the folding knife 511 to move toward the battery core 70 subsequently, to perform the film folding operation on the protective film.

Further, the film folding and pressing mechanism 50 further includes two pressing assemblies 53. The pressing assemblies 53 are arranged below the folding knife assembly 51. The two pressing assemblies 53 are arranged opposite to each other in the first direction. Each of the pressing assemblies 53 is configured to tightly press the protective film on the side surface of the battery core 70 in the first direction. Specifically, the film folding and pressing mechanism 50 further includes two pressing assemblies 53. The pressing assemblies 53 are located below the folding knife assembly 51. The two pressing assemblies 53 are arranged opposite to each other in the first direction, and are located on two sides of the battery core 70 in the first direction. A pressing operation is performed on the protective film on the two sides of the battery core 70, to reduce the gap between the protective film and the battery core 70, so that the protective film is attached to the battery core 70 more tightly.

Specifically, the film suction mechanism 20 adsorbs the protective film. The protective film is placed flat on the film suction mechanism 20. The battery core 70 is vertically placed on the protective film. A side surface of the battery core 70 in the second direction is attached to the protective film. Secondly, the roller mechanism 40 moves upward relative to the first base 10, so that a part of the protective film is attached to the battery core 70. In this case, the pressing assembly 53 performs the pressing operation on the two side surfaces of the battery core 70 in the first direction, to prevent the protective film from falling due to gravity. The operation of attaching the protective film to the two side surfaces of the battery core 70 in the first direction is completed. Next, the folding knife assembly 51 bends the remaining part of the protective film, and overlaps the protective film on the two sides of the battery core 70 in the second direction with the battery core 70. In this way, the battery core 70 is wrapped with the protective film. Finally, the film folding and pressing mechanism 50 is reset. The roller mechanism 40 moves downward relative to the first base 10 and is reset. Through cooperation of the various mechanisms, high-precision positioning and film wrapping can be implemented. After the film wrapping, the gap between the protective film and the battery core 70 is small, the quality of the wrapped film and product to be subsequently loaded into a casing is ensured, and the automatic film wrapping efficiency for a product is improved.

In addition, the pressing assembly 53 includes a second driving member 531 and a pressing plate 532. The second driving member 531 is in driving connection with the pressing plate 532. The second driving member 531 drives the pressing plate 532 to move in the first direction. Specifically, the pressing assembly 53 includes the second driving member 531 and the pressing plate 532. The second driving member 531 is in driving connection with the pressing plate 532. The second driving member 531 performs an action, and the pressing plate 532 in driving connection with the second driving member 531 performs an action accordingly. The pressing plate 532 moves in the first direction. In other words, the pressing plate 532 moves toward the battery core 70 and presses the protective film on the side surfaces on the two sides of the battery core 70, to reduce the gap between the protective film and the battery core 70, so that the protective film is attached to the battery core 70 more tightly.

As shown in FIG. 1, the film suction mechanism 20 includes two first film suction plates 21 and two second film suction plates 22. The two first film suction plates 21 are arranged between the two second film suction plates 22. The flipping mechanism 30 is in driving connection with the first film suction plate 21 to drive the protective film to be folded. Specifically, the film suction mechanism 20 includes two first film suction plates 21 and two second film suction plates 22. The two first film suction plates 21 are located between the two second film suction plates 22. The two second film suction plates 22 are located on two sides of the first base 10 in the first direction. The first film suction plate 21 may rotate relative to the first base 10. The flipping mechanism 30 is connected to the two first film suction plates 21. The flipping mechanism 30 may drive the two first film suction plates 21 to rotate relative to the first base 10, so that a part of the protective film bends and is attached to the two side surfaces of the battery core 70 in the first direction. The roller mechanism 40 moves upward, so that the protective film is flatly attached to the battery core 70. Through the cooperation of various mechanisms, high-precision positioning and film wrapping can be implemented. After the film wrapping, the gap between the protective film and the battery core 70 is small, the quality of the wrapped film and a product to be subsequently loaded into a casing is ensured, and the automatic film wrapping efficiency for a product is improved.

With reference to FIG. 1 and FIG. 2, the flipping mechanism 30 includes two driving assemblies 31. The two driving assemblies 31 are arranged opposite to each other. One of the driving assemblies 31 is in driving connection with one of the first film suction plates 21, and the other of the driving assemblies 31 is in driving connection with the other of the first film suction plates 21. Specifically, the flipping mechanism 30 includes two driving assemblies 31. The two driving assemblies 31 are arranged opposite to each other. The two driving assemblies 31 are respectively located at two ends of the first base 10 in an axial direction. One of the driving assemblies 31 is in driving connection with one of the first film suction plates 21. One of the driving assemblies 31 performs an operation, and one of the first film suction plates 21 performs the operation accordingly, so that the first film suction plate 21 rotates relative to the first base 10. The protective film on one side of the battery core 70 in the first direction bends and abuts against one side surface of the battery core 70. The other driving assembly 31 is in driving connection with the other first film suction plate 21. The other of the driving assemblies 31 performs an operation, and the other of the first film suction plates 21 performs the operation accordingly, so that the first film suction plate 21 rotates relative to the first base 10. The protective film on the other side of the battery core 70 in the first direction bends and abuts against the other side surface of the battery core 70. Therefore, the protective film abuts against the two side surfaces of the battery core 70 in the first direction. Through the cooperation of various mechanisms, high-precision positioning and film wrapping can be implemented. The quality of the wrapped film and a product to be subsequently loaded into a casing is ensured, and the automatic film wrapping efficiency for a product is improved.

Further, the driving assembly 31 includes a third driving member 311, a first transmission member 312, and a second transmission member 313. The third driving member 311 is in driving connection with the first transmission member 312. The first transmission member 312 is in driving connection with the second transmission member 313. The second transmission member 313 is in driving connection with the first film suction plate 21 and configured to drive the first film suction plate 21 to rotate. Specifically, the driving assembly 31 includes a third driving member 311, a first transmission member 312, and a second transmission member 313. The first transmission member 312 is a rack. The second transmission member 313 is a gear. The third driving member 311 is in driving connection with the first transmission member 312. The first transmission member 312 is in driving connection with the second transmission member 313. The second transmission member 313 is in driving connection with the first film suction plate 21. Specifically, when the battery core 70 is placed on the protective film, the third driving member 311 is retracted. The first transmission member 312 in driving connection with the third driving member 311 is moved to a side facing away from the battery core 70 in the first direction. The second transmission member 313 is rotated, to drive the two first film suction plates 21 to rotate relative to the first base 10 toward the battery core 70. In this way, the protective film abuts against the two side surfaces of the battery core 70 in the first direction, and the battery core 70 is tightly fastened.

As shown in FIG. 1, FIG. 2, and FIG. 7, the battery core protective film wrapping device 100 further includes two positioning mechanisms 60. The positioning mechanisms 60 are arranged on a side of the driving assembly 31 facing the film folding and pressing mechanism 50. The positioning mechanism 60 includes a fourth driving member 61 and a positioning block 62. The positioning block 62 is configured to position the battery core 70, for example, but is not limited to, configured to position positive and negative lugs or positive and negative spacers of the battery core 70. Specifically, the battery core protective film wrapping device 100 is further provided with two positioning mechanisms 60. The positioning mechanisms 60 are arranged on a side of the driving assembly 31 facing the film folding and pressing mechanism 50. The positioning mechanisms 60 are located on two sides of the first base 10 in the axial direction. The positioning mechanisms 60 may position the battery core 70, so as to conveniently wrap the battery core 70 with the protective film. The positioning mechanism 60 includes a fourth driving member 61 and a positioning block 62. The fourth driving member 61 extends, and drives the positioning block 62 to move until the positioning block 62 abuts against the battery core 70, for example, abuts against the positive and negative lugs of the battery core 70 or spacers of the positive and negative lugs of the battery core 70, so as to position and fix the battery core 70, thereby ensuring precision of wrapping the protective film.

As shown in FIG. 1, FIG. 3, and FIG. 5, the roller mechanism 40 includes two rollers 41 and a fifth driving member 42. The two rollers 41 are respectively arranged on outer sides of the two first film suction plates 21. The fifth driving member 42 drives the two rollers 41 to move up and down. Specifically, the roller mechanism 40 includes two rollers 41 and a fifth driving member 42. The two rollers 41 are arranged on two sides of the two first film suction plates 21. The two rollers 41 are respectively located between the first film suction plate 21 and the second film suction plate 22. The fifth driving member 42 may drive the two rollers 41 to move up and down relative to the first base 10. After a part of the protective film abuts against the two side surfaces of the battery core 70 in the first direction, the fifth driving member 42 performs an action. The two rollers 41 move upward synchronously, so that the protective film is flatly attached to the two side surfaces of the battery core 70. Therefore, the operation of attaching the protective film to the two side surfaces of the battery core 70 in the first direction is completed. The roller mechanism 40 causes the protective film to be attached to the battery core 70 flat and smoothly, and a small gap exists therebetween. In this way, the quality of the wrapped film and product to be subsequently loaded into a casing is ensured, and the automatic film wrapping efficiency for a product is improved.

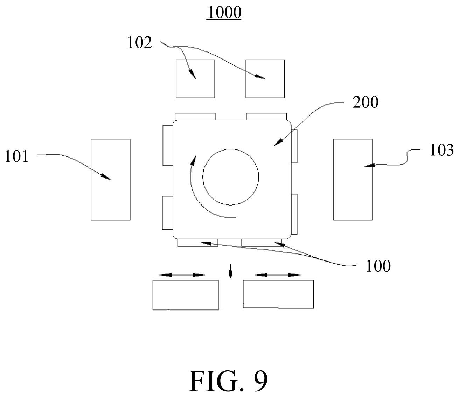

With reference to FIG. 1 to FIG. 3, FIG. 8, and FIG. 9, the battery core protective film wrapping system 1000 includes a rotary table device 200 and battery core protective film wrapping devices 100. The rotary table device 200 is provided with multiple mounting grooves 210. Multiple battery core protective film wrapping devices 100 are respectively arranged in the multiple mounting grooves 210. Specifically, the battery core protective film wrapping system 1000 includes a battery core protective film wrapping device 100 and a rotary table device 200. The rotary table device 200 is provided with a rotary shaft 220 and multiple mounting grooves 210. A process including film loading, battery core loading, film wrapping, hot melting, and battery core unloading can be completed once every 90° clockwise rotation of the rotary shaft 220. In addition, the rotary table device may be extended to include multiple mounting grooves 210 as needed, saving device space and significantly improving a film wrapping efficiency. The multiple battery core protective film wrapping devices 100 are respectively arranged in the multiple mounting grooves 210. Two battery core protective film wrapping devices 100 may be arranged. Two mounting grooves 210 may also be provided. The battery core protective film wrapping devices 100 are in one-to-one correspondence with the mounting grooves 210.

In addition, the battery core protective film wrapping system 1000 further includes a loading manipulator 101, a hot melting mechanism 102, and an unloading manipulator 103. The loading manipulator 101 is arranged at one angle of the rotary table device 200. The hot melting mechanism 102 is arranged at another angle of the rotary table device 200. The unloading manipulator 103 is arranged at yet another angle of the rotary table device 200. The unloading manipulator 103 is arranged opposite to the loading manipulator 101. Specifically, the battery core protective film wrapping system 1000 further includes a loading manipulator 101, a hot melting mechanism 102, and an unloading manipulator 103. The loading manipulator 101, the hot melting mechanism 102, and the unloading manipulator 103 are respectively located at a certain angle of the rotary table device 200, which do not interfere with each other to wrap the battery core 70 with the protective film. The loading manipulator 101 grabs the battery core 70 and places it on the protective film, rotates 90° to a hot melting workstation at which hot melting is performed, and after the hot melting is completed, rotates 90° to a battery core unloading workstation at which hot melting is performed. The unloading manipulator 103 grabs the wrapped battery core 70, and transfers the wrapped battery core to a next workstation.

Specifically, the loading manipulator 101 grabs a battery core 70 and places it on the protective film. The film suction mechanism 20 adsorbs the protective film. The protective film is placed flat on the film suction mechanism 20. The battery core 70 is placed vertically on the protective film. One side surface of the battery core 70 in the second direction is attached to the protective film. Secondly, the flipping mechanism 30 drives a part of the film suction mechanism 20 to rotate relative to the first base 10, so that the protective film bends. Therefore, the protective film abuts against the two side surfaces of the battery core 70 in the first direction. Next, the roller mechanism 40 moves upward relative to the first base 10, so that a part of the protective film is flatly attached to the battery core 70. In this case, the pressing assembly 53 performs the pressing operation on the two side surfaces of the battery core 70 in the first direction, to prevent the protective film from falling due to gravity. The operation of attaching the protective film to the two side surfaces of the battery core 70 in the first direction is completed. Then, the folding knife assembly 51 bends the remaining part of the protective film, and wraps a second side surface of the battery core 70 with the protective film in the second direction. Finally, the film folding and pressing mechanism 50 is reset. The roller mechanism 40 moves downward relative to the first base 10 and is reset. The unloading manipulator 103 grasps the battery core 70 and transfers the wrapped battery core to a next workstation.

In the description of the present disclosure, it should be understood that orientation or position relationships indicated by the terms such as "center", "longitudinal", "transverse", "length", "width", "thickness", "up", "down", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the foregoing terms do not necessarily mean the same embodiment or example.

Although the embodiments of the present disclosure have been shown and described, a person of ordinary skill in the art may understand that various changes, modifications, replacements, and variations may be made to the embodiments without departing from the principle and spirit of the present disclosure, and the scope of the present disclosure is as defined by the appended claims and their equivalents.

## Claims

1. A battery core protective film wrapping device (100), comprising:
a first base (10);
a film suction mechanism (20), the film suction mechanism (20) being arranged on the first base (10);
a flipping mechanism (30), the flipping mechanism (30) being arranged on the first base (10), the flipping mechanism (30) driving one part of the film suction mechanism (20) to rotate relative to another part of the film suction mechanism (20);
a roller mechanism (40), the roller mechanism (40) being arranged on the first base (10) and movable up and down relative to the first base (10), and the roller mechanism (40) being configured to wrap a protective film around a side surface of a battery core (70) in a first direction; and
a film folding and pressing mechanism (50), the film folding and pressing mechanism (50) comprising a folding knife assembly (51), the folding knife assembly (51) comprising:
a folding knife (511); and
a first driving member (512), the first driving member (512) driving the folding knife (511) to move, and the folding knife (511) being configured to wrap the protective film around a side surface of the battery core (70) in a second direction.

2. The battery core protective film wrapping device (100) according to claim 1, wherein two folding knife assemblies (51) are arranged, the two folding knife assemblies (51) being arranged opposite to each other.

3. The battery core protective film wrapping device (100) according to claim 1 or 2, wherein the film folding and pressing mechanism (50) further comprises:
a first lifting assembly (52), the first lifting assembly (52) being in driving connection with the folding knife assembly (51), and the first lifting assembly (52) being configured to drive the folding knife assembly (51) to move in the second direction.

4. The battery core protective film wrapping device (100) according to any of claims 1 to 3, wherein the film folding and pressing mechanism (50) further comprises:
two pressing assemblies (53), the pressing assemblies (53) being arranged below the folding knife assembly (51), the two pressing assemblies (53) being arranged opposite to each other in the first direction, and each of the pressing assemblies (53) being configured to tightly press the protective film on the side surface of the battery core (70) in the first direction.

5. The battery core protective film wrapping device (100) according to claim 4, wherein the pressing assembly (53) comprises:
a second driving member (531); and
a pressing plate (532), the second driving member (531) being in driving connection with the pressing plate (532), and the second driving member (531) being configured to drive the pressing plate (532) to move in the first direction.

6. The battery core protective film wrapping device (100) according to any of claims 1 to 5, wherein the film suction mechanism (20) comprises:
two first film suction plates (21); and
two second film suction plates (22), each of the two first film suction plates (21) being arranged between the two second film suction plates (22), and the flipping mechanism (30) being in driving connection with the first film suction plate (21) to drive the protective film to be folded.

7. The battery core protective film wrapping device (100) according to claim 6, wherein the flipping mechanism (30) comprises:
two driving assemblies (31), the two driving assemblies (31) being arranged opposite to each other, one of the driving assemblies (31) being in driving connection with one of the first film suction plates (21), and the other of the driving assemblies (31) being in driving connection with the other of the first film suction plates (21).

8. The battery core protective film wrapping device (100) according to claim 7, wherein each of the driving assemblies (31) comprises:
a third driving member (311);
a first transmission member (312); and
a second transmission member (313), the third driving member (311) being in driving connection with the first transmission member (312), the first transmission member (312) being in driving connection with the second transmission member (313), and the second transmission member (313) being in driving connection with the first film suction plate (21) and configured to drive the first film suction plate (21) to rotate.

9. The battery core protective film wrapping device (100) according to claim 7 or 8, further comprising:
two positioning mechanisms (60), each of the positioning mechanisms (60) being arranged on a side of the driving assembly (31) facing the film folding and pressing mechanism (50), the positioning mechanism (60) comprising:
a fourth driving member (61); and
a positioning block (62), the positioning block (62) being configured to position the battery core (70).

10. The battery core protective film wrapping device (100) according to any of claims 6 to 9, wherein the roller mechanism (40) comprises:
two rollers (41), the two rollers (41) being respectively arranged on outer sides of the two first film suction plates (21); and
a fifth driving member (42), the fifth driving member (42) driving the two rollers (41) to move up and down.

11. A battery core protective film wrapping system (1000), comprising:
a rotary table device (200), the rotary table device (200) being provided with a plurality of mounting grooves (210); and
a plurality of battery core protective film wrapping devices (100) according to any of claims 1 to 10, the plurality of battery core protective film wrapping devices (100) being respectively arranged in the plurality of mounting grooves (210).

12. The battery core protective film wrapping system (1000) according to claim 11, further comprising:
a loading manipulator (101), the loading manipulator (101) being arranged at one angle of the rotary table device (200);
a hot melting mechanism (102), the hot melting mechanism (102) being arranged at another angle of the rotary table device (200); and
an unloading manipulator (103), the unloading manipulator (103) being arranged at yet another angle of the rotary table device (200), and the unloading manipulator (103) being arranged opposite to the loading manipulator (101).
